# EUROPEAN PATENT APPLICATION

(11) **EP 1 566 949 A1**
(43) Date of publication of application: **24.08.2005**
(21) Application number: 05101132.8
(22) Date of filing: 15.02.2005
(51) Int. Cl.: H04L 29/08

(54) **Narrowband and broadband vpn optimal path selection using the global positioning system**

(30) Priority: 18.02.2004 US 782619
(71) Applicant: AT&T Corp., New York, NY 10013-2412 (US)
(72) Inventor: Hutnik, Stephen M., Hawthorne, New York 10532 (US); Satterlee, Michael, Yorktowne Heights, New York 01598 (US)
(74) Representative: Harding, Richard Patrick

(57) **Abstract**

Method and system are disclosed for selecting a tunnel server in a virtual private network that is closest to a user device. The user device may be equipped with location reporting equipment, such as a GPS module. When the user device connects to the VPN, it automatically uses the tunnel server that is nearest based on geographical coordinates provided by the location reporting equipment. Selection of the closest tunnel server may be performed by the user device itself, or it may be performed by a network server. Where more than one tunnel servers are near to the user device, the tunnel server may be selected based on load balancing objectives.

## Description

### FIELD OF THE INVENTION

This invention relates to the field of telecommunication and, in particular, to a system and method of selecting an optimal path for connecting to a virtual private network (VPN).

### BACKGROUND OF THE INVENTION

A VPN, as the name implies, is a private network that is established over an otherwise public network, such as the Internet. Typically used in a corporate environment, the VPN can provide secure and reliable transfer of text, voice, image, and video data between locally and remotely located offices without the use of expensive, dedicated data lines. Instead, the VPN employs a combination of encryption and user authentication along with other security mechanisms to maintain the security of the communication. For more information regarding VPNs, the reader is directed to, for example, I. Pepelnjak and J. Guichard, "MPLS and VPN Architectures," Cisco Press, 2001.

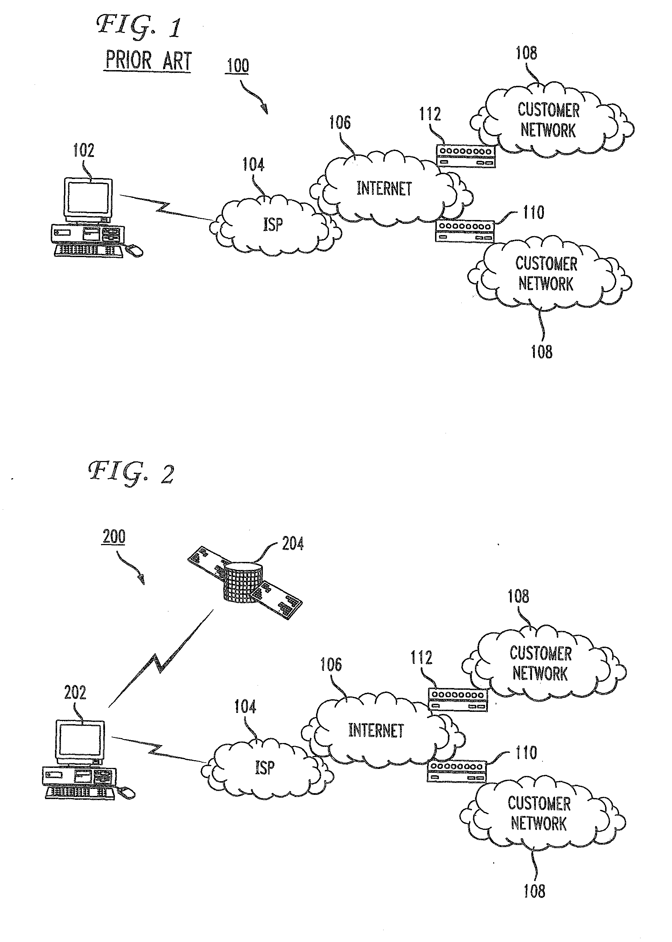

A portion of a typical VPN 100 is shown in Figure 1. As can be seen, a user device 102 may access the VPN 100 through an Internet service provider (ISP) 104. The user device 102 may be located essentially anywhere in the world, and may be any suitable device, including a desktop computer, a laptop computer, a personal digital assistant (PDA), and the like, so long as these devices are capable of executing a VPN client thereon. Similarly, the connection (shown as a lighting bolt) to the Internet service provider 104 may be any suitable connection, including a narrowband connection, a broadband connection, a wired connection, a wireless connection, and so on. The Internet service provider 104 lets the user device 102 connect to the Internet (indicated generally at 106), from which the user device 102 may then connect to a customer network 108 via one of several tunnel servers 110 and 112 (also called VPN servers).

The tunnel servers 110 and 112 encrypt and encapsulate the communication between the user device 102 and the customer network 108 to make the communication confidential and secure. Depending on the specific location of the user device 102, one of the tunnel servers 110 or 112 may be geographically closer to the user device 102 then the others. Ideally, the user device 102 connects to the nearest tunnel server 110 or 112 so that optimal call routing and load balancing among the tunnel servers may be achieved. This helps reduce the latency in the VPN and may minimize the response time experienced by the user device 102.

Unfortunately, it is not presently possible for a VPN client to automatically choose the closest tunnel server 110 or 112. This limitation applies to both broadband and narrowband connections. In the case of narrowband (e.g., dial-up), the tunnel server must be manually chosen by the user device 102, which often results in sub-optimal call routing and load balancing. As for broadband, there is currently no way for a user device 102 to pick the closest tunnel server, since there is no way to determine the geographic location of the user device 102.

Accordingly, what is needed is a way to allow a VPN client in a remotely located user device to connect to the closest tunnel server in a VPN. Specifically, what is needed is a way for the VPN client to connect to the closest tunnel server automatically with little or no intervention from the user.

### SUMMARY OF THE INVENTION

The present invention is directed to a method and system for automatically selecting a tunnel server in a VPN that is closest to a user device. In accordance with the method and system of the present invention, the user device may be equipped with location reporting equipment, such as a GPS module. When the user device connects to the VPN, it automatically uses the tunnel server that is nearest based on geographical coordinates provided by the location reporting equipment. Selection of the closest tunnel server may be performed by the user device itself, or it may be performed by a network server. Where more than one tunnel servers are near to the user device, the tunnel server may be selected based on load balancing objectives.

In general, in one aspect, the invention is directed to a method of optimizing network routing and load distribution in a virtual private network. The method comprises the steps of obtaining geographical coordinates for a user device, and determining an optimal network server for the user device based on the geographical coordinates. The method further comprises connecting the user device to the virtual private network through the optimal network server.

In general, in another aspect, the invention is directed to a user device capable of automatically connecting to an optimal network server in a virtual private network. The user device comprises location reporting equipment connected to the user device and configured to provide geographical coordinates for a location of the user device. The user device further comprises a central processing unit connected to the location reporting equipment and a storage unit connected to the central processing unit. The storage unit stores a virtual private network client thereon that is capable of obtaining geographical coordinates for the user device from the location reporting equipment, determining an optimal network server for the user device based on the geographical coordinates, and connecting the user device to the virtual private network through the optimal network server.

In general, in yet another aspect, the invention is directed to a virtual private network. The virtual private network comprises a plurality of network servers and an authentication server connected to the network servers. The authentication server has a virtual private network host executing thereon and is configured to receive geographical coordinates for a user device requesting access to the network servers. The authentication server is further configured to determine an optimal network server for the user device based on the geographical coordinates, and send identifying information for the optimal network server to the user device.

### BRIEF DESCRIPTION OF DRAWINGS

Reference will now be made, by way of example, to the accompanying drawings, wherein:
Figure 1, described above, illustrates a conventional corporate VPN;
Figure 2 illustrates an exemplary VPN wherein a user device determines the closest tunnel server according to embodiments of the invention;
Figure 3 illustrates a block diagram of an exemplary user device according to embodiments of the invention;
Figure 4 illustrates an exemplary VPN wherein a network server determines the closest tunnel server according to embodiments of the invention;
Figure 5 illustrates a block diagram of an exemplary network server according to embodiments of the invention;
Figure 6 illustrates a method of connecting to a VPN according to embodiments of the invention; and
Figure 7 illustrates another method of connecting to a VPN according to embodiments of the invention.

### DESCRIPTION OF ILLUSTRATIVE EMBODIMENTS

Following is a detailed description of illustrative embodiments of the invention with reference to the drawings wherein the same reference labels are used for the same or similar elements.

As mentioned above, embodiments of the invention provide a user device, such as a desktop computer, laptop computer, PDA, and the like, that is equipped with location reporting equipment, such as a GPS (global positioning system) module. Such location reporting equipment are well-known to persons having ordinary skill in the art and will therefore not be described here. It will suffice to say that the purpose of the location reporting equipment is to provide the user device with the geographical coordinates for its location. As used herein, the term "geographical coordinates" refers to any suitable system for identifying the location of the user device, including the longitude and latitude of the user device. This location information may then be used to automatically select the VPN tunnel server closest to the user device. The selection of the closest tunnel server may be performed either by the user device, or it may be performed by a network server.

Figure 2 illustrates an exemplary VPN 200 where a user device 202 determines the closest tunnel server. The VPN 200 is similar to the VPN 100 of Figure 1 in that it includes an Internet service provider 104 which allows the user device 202 to connect to the Internet 106. From the Internet 106, the user device 202 may then access a customer network 108 via one or more tunnel servers 110 and 112. Unlike Figure 1, however, the user device 202 has location reporting equipment, namely, a GPS module (not visible here) attached thereto. A global satellite system 204 provides the GPS module with the geographical coordinates of the user device 202 upon request. Thus, the user device 202 is capable of knowing its approximate geographical location at any given time.

To access the customer network 108, the user device 202 first establishes a connection to the Internet service provider 104. The connection to the Internet service provider 104 may be any suitable connection, but for embodiments such as the one described here, it is typically a broadband connection. As part of the connection process, the VPN client of the user device 202 obtains the device's geographical coordinates from the GPS module. The VPN client then determines which tunnel server 110 or 112 is closest to the user device 202 based on the geographical coordinates. The VPN client thereafter establishes a connection through that tunnel server 110 or 112 to the customer network 108. The connection to the customer network 108 may be established in a known manner and using known protocols.

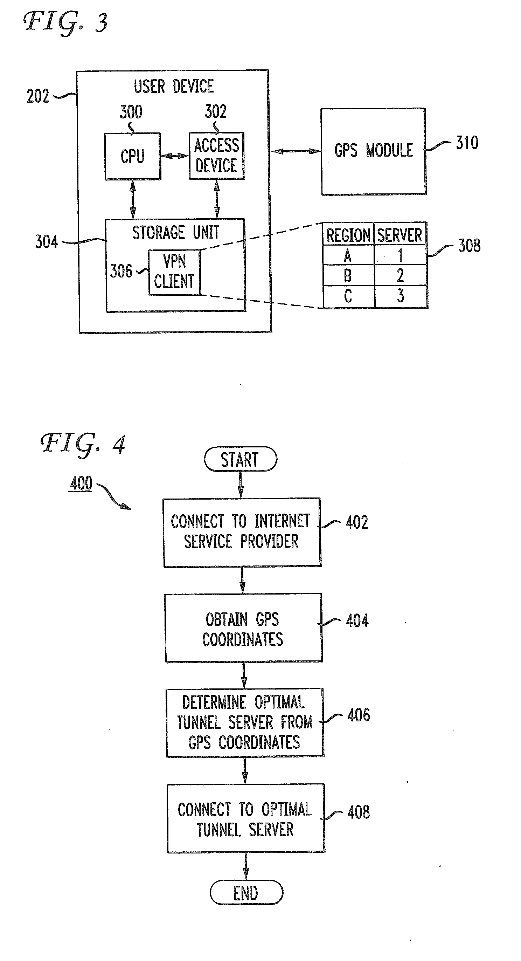

Figure 3 illustrates the user device 202 in more detail. As can be seen, the user device 202 has a number of functional components, including a central processing unit (CPU) 300, a network access device 302 (e.g., cable modem, DSL modem, dial-up modem, network interface card (NIC), etc.) and a storage unit 304. These functional components are generally well-known and therefore will be described only briefly here. Basically, the CPU 300 has primary responsibility for the overall operation of the user device 202, including execution of the operating system therefor as well as any associated applications thereon. The network access device 302 is responsible for implementing the various procedures and protocols used by the VPN client to connect the user device 202 to the VPN 200. Finally, the storage unit 304 provides both long-term and temporary storage for the operating system and any data used by the user device 202. The storage unit 304 also stores the software applications that are run on the user device 202, including a VPN client 306.

In accordance with the principles and teachings of the invention, the VPN client 306 includes, or has access to, a tunnel server list 308 that is stored on the storage unit 304. The list 308, which may be updated from time to time, includes the names and/or other identifications of the tunnel servers in the VPN 200 along with the geographical region serviced by each tunnel server. From this list 308, the VPN client 306 may determine which tunnel server 110 or 112 is closest to the location of the user device 202 based on the geographical coordinates provided by the GPS module 310. The VPN client 306 may then connect through that tunnel server 110 or 112 to access the customer network 108. In the event more than one tunnel server is close to the user device 202, the VPN client 306 is configured to query the tunnel servers 110 and 112 in order to determine which one has the lightest load. The VPN client 306 may thereafter connect through that tunnel server to access the customer network. In this way, optimal routing and load balancing may be achieved in the VPN 200.

Figure 4 illustrates a method 400 for accessing a VPN where the user device determines which tunnel server to use. As can be seen, the method 400, in some embodiments, begins at step 402 where a connection is made between the user device and an Internet service provider. In step 404, the user device obtains the geographical coordinates for its location. Note that steps 402 and 404 may be switched in terms of their sequence without departing from the scope of the invention. In step 406, the user device determines which tunnel server results in the optimal connection based on the geographical coordinates thereof. The tunnel server may be, for example, the one that is closest to the geographical device, and/or it may be the one that has the smallest loading at the time. In the latter case, the optimal connection may not always result in the user device being connected to the closest tunnel server. For example, if the user device is on a broadband connection, the optimal connection may be a tunnel server that is located farther away, but is less loaded than a tunnel server that is closer to the user device. Thereafter, the user device establishes a connection to the customer network through that tunnel server in step 408.

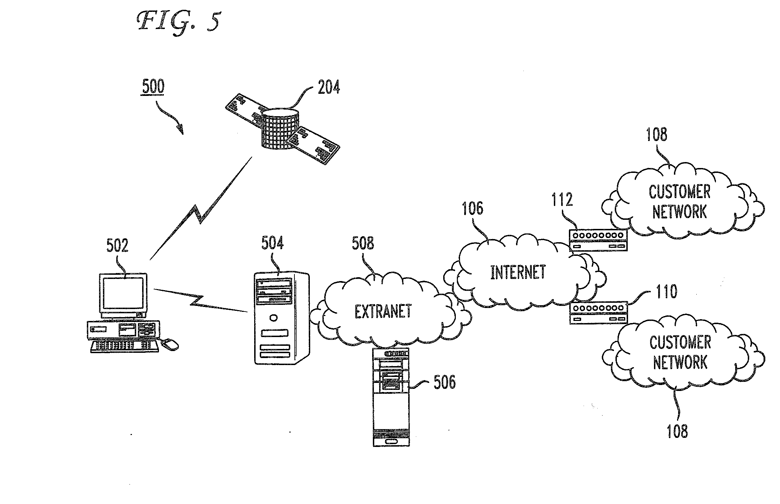

Figure 5 illustrates a VPN 500 wherein selection of the closest tunnel server is made by a network server according to embodiments of the invention. As can be seen, the VPN 500 is somewhat different from the network to 200 of Figure 2 in that in addition to a user device 502, it also includes a remote access server 504, and an authentication server 506. The remote access server 504 allows the user device 502 to connect to an extranet 508, from which the user device 502 may connect to the Internet 106 and thereafter to the customer network 108. This connection, as before, may be any suitable connection, but is typically a narrowband connection (e.g., dial-up modem) in this embodiment. The authentication server 506 authenticates the user device 502 to ensure that the user device 502 is authorized to access the extranet 508 and, hence, the customer network 108.

To access the customer network 108, the user device 502 establishes a connection to the remote access server 504 using an appropriate connection procedure. As part of the connection process, the VPN client of the user device 502 obtains the device's geographical coordinates from the GPS module. The VPN client then forwards the geographical coordinates of the user device to the authentication server 506 (through the remote access server 504) along with authentication information that can be used to authenticate the user device. The authentication server 506, after authenticating the user device 502, determines the tunnel server 110 or 112 that is closest to the user device based on the geographical coordinates. It subsequently informs the VPN client which tunnel server 110 or 112 is closest. The VPN client thereafter establishes a connection through that tunnel server 110 or 112 to the customer network 108 in a known manner and using known protocols.

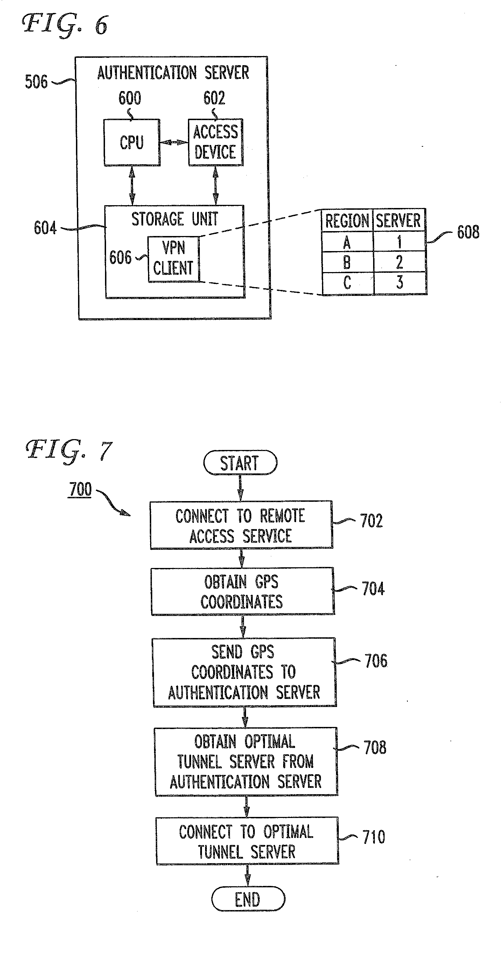

Figure 6 illustrates the authentication server 506 in more detail. As can be seen, the authentication server 506 includes some of the same functional components as the user device 502. Specifically, the authentication server 506 includes a central processing unit (CPU) 600, an access device 602 that is typically a network interface card (NIC), etc.) and a storage unit 604. The storage unit 604 stores the software applications that run on the authentication server 506, including a VPN host 606.

In accordance with embodiments of the invention, the VPN host 606 includes, or has access to, a tunnel server list 608 that is stored on the storage unit 604. The tunnel server list 608, which may be updated from time to time, contains the names and/or identifications of the tunnel servers in the VPN 500 along with the geographical region serviced by each tunnel server. From this list 608, the VPN host 606 may determine which tunnel server 110 or 112 is closest to the location of the user device 502 based on the geographical coordinates from the VPN client. The VPN host 606 can then inform the VPN client of the name and/or other identification of that tunnel server. In the event more than one tunnel server is close to the user device 502, the VPN host 606 is configured to query the tunnel servers 110 and 112 in order to determine which one has the lightest load. The VPN host 606 thereafter forwards this information to the VPN client of the user device 502. In this way, optimal routing and load balancing may be achieved in the VPN 500.

Figure 7 illustrates a method 700 for accessing a VPN where an authentication server determines which tunnel server to use. As can be seen, the method 700, in some embodiments, begins at step 702 where a connection is made between the user device and a remote access server. In step 704, the user device obtains the geographical coordinates for its location. Note that steps 702 and 704 may be switched in terms of their present sequence without departing from the scope of the invention. In step 706, the user device forwards the geographical coordinates to an authentication server for determining which tunnel server results in an optimal connection based on the geographical coordinates. The tunnel server may be, for example, the one that is closest to the geographical device, and/or it may be the one that has the smallest loading at the time. Once the authentication server determines which tunnel server results in the optimal connection, it sends this information back to the user device. Thereafter, the user device establishes a connection to the customer network through that tunnel server in step 708.

While the present invention has been described with reference to one or more particular embodiments, those skilled in the art will recognize that many changes may be made thereto without departing from the spirit and scope of the present invention. Each of these embodiments and obvious variations thereof is contemplated as falling within the spirit and scope of the claimed invention, which is set forth in the following claims.

## Claims

1. A method of optimizing network routing and load distribution in a virtual private network, comprising:
obtaining geographical coordinates for a user device;
determining an optimal network server for the user device based on the geographical coordinates; and
connecting the user device to the virtual private network through the optimal network server.

2. The method according to claim 1, wherein the step of determining comprises the user device automatically selecting the optimal network server based on the geographical coordinates.

3. The method according to claim 1, wherein the step of determining comprises the user device sending the geographical coordinates to an authentication server for selecting the optimal network server based on the geographical coordinates.

4. The method according to claim 1, 2 or 3, wherein the optimal network server is selected based on proximity to the user device.

5. The method according to any preceding claim, wherein the optimal network server is selected based on load distribution.

6. The method according to any preceding claim, further comprising authenticating the user device before allowing it to be connected to the virtual private network.

7. A user device capable of automatically connecting to an optimal network server in a virtual private network, comprising:
location reporting equipment connected to the user device and configured to provide geographical coordinates for a location of the user device;
a central processing unit connected to the location reporting equipment; and
a storage unit connected to the central processing unit, the storage unit storing a virtual private network client thereon that is capable of:
obtaining geographical coordinates for the user device from the location reporting equipment;
determining an optimal network server for the user device based on the geographical coordinates; and
connecting the user device to the virtual private network through the optimal network server.

8. The user device according to claim 7, wherein the location reporting equipment is a GPS module.

9. The user device according to claim 7 or 8, wherein the virtual private network client determines the optimal network server by selecting it from a list of network servers based on the geographical coordinates.

10. The user device according to claim 7, 8 or 9, further comprising a network access device connected to the central processing unit, the network access device being capable of establishing a broadband connection between the user device and the virtual private network.

11. The user device according to claim 7, 8 or 9, further comprising a network access device connected to the central processing unit, the network access device being capable of establishing a narrowband connection between the user device and the virtual private network.

12. A virtual private network, comprising:
a plurality of network servers; and
an authentication server connected to the network servers, the authentication server having a virtual private network host executing thereon and configured to:
receive geographical coordinates for a user device requesting access to the network servers;
determine an optimal network server for the user device based on the geographical coordinates; and
send identifying information for the optimal network server to the user device.

13. The virtual private network according to claim 12, further comprising a remote access server capable of connecting the user device to the virtual private network and also to the Internet.

14. The virtual private network according to claim 12 or 13, wherein at least one of the network servers is a tunnel server.
